# EUROPÄISCHE PATENTANMELDUNG

(11) **EP 1 710 884 A1**
(43) Veröffentlichungstag der Anmeldung: **11.10.2006**
(21) Anmeldenummer: 06006210.6
(22) Anmeldetag: 25.03.2006
(51) Int. Cl.: H02G 5/00

(54) **Geschichtete zwei-oder mehrphasige Stromschienenanordnung**

(30) Priorität: 07.04.2005 DE 102005015945
(71) Anmelder: ABB PATENT GmbH, 68526 Ladenburg (DE)
(72) Erfinder: Merkel, Hans-Peter, Dipl.-Ing., 69198 Schriesheim (DE)
(74) Vertreter: Miller, Toivo

(57) **Zusammenfassung**

Die Erfindung betrifft eine Kontakteinrichtung für eine zwei- oder mehrphasige Stromschienenanordnung mit einer Stromschiene (10, 21, 22) pro Phase, die als Flachbandleiter zwischen je zwei Isolierkörpern (18, 19; 19,14; 14, 20) eingelegt sind, wobei die Isolierkörper (18, 19, 14, 20) und die Stromschienen (10, 21, 22) mechanisch miteinander verbindbar sind, wobei die Isolierkörper (...) eine der Anzahl der Phasen entsprechende Anzahl von Durchbrüchen (51, 56; 52, 58) mit einer ersten lichten Weite aufweisen, wobei die Stromschienen mit einer ersten Bohrung (11) mit einer der ersten lichten Weite entsprechenden lichten Weite und wenigstens einer zweiten Bohrung (12, 13) mit einer gegenüber der ersten lichten Weite vergrößerten weiteren lichten Weite versehen sind, welche erste und zweite Bohrungen (11, 12, 13) so angeordnet sind, dass bei Übereinanderlegen zweier Stromschienen sich die erste Bohrung der einen Stromschiene im Bereich der zweiten Bohrung der anderen Stromschiene befindet, und wobei jeweils eine Stromschiene mit jeweils einem Hochstromkontakt kontaktierbar ist.

## Beschreibung

Die Erfindung betrifft eine Kontakteinrichtung für eine zwei- oder mehrphasige Stromschienenanordnung mit wenigstens einer Stromschiene pro Phase, die als Flachbandleiter ausgebildet ist.

Zur Stromverteilung innerhalb einer Niederspannungsschaltanlage beispielsweise werden horizontal verlaufenden Stromschienen vertikal verlaufende Verteilerschienen zugeordnet; die Kontaktierung zwischen diesen Stromschienen erfolgt entweder mittels Gabelkontakten zur steckbaren Verbindung oder bei einer Festverdrahtung mittels Schraubverbindungen.

Beide Arten einer elektrisch leitenden Verbindung benötigen in der Regel sehr viel Platz, was sich insbesondere bei der Kombination von Leistungs- und Steuerkreisen in einem Gehäuse nachteilig auswirken kann.

Aufgabe der Erfindung ist es, eine Kontakteinrichtung der eingangs genannten Art zu schaffen, bei der der Platzbedarf verringert ist.

Diese Aufgabe wird erfindungsgemäß durch die Merkmale des Anspruches 1 gelöst.

Die Erfindung ist also durch eine Kontakteinrichtung für eine zwei- oder mehrphasige Stromschienenanordnung mit einer Stromschiene pro Phase, die als Flachbandleiter zwischen die zwei Isolierkörper eingelegt ist, verwirklicht, wobei die Isolierkörper und die Stromschienen miteinander mechanisch verbindbar sind, wobei die Isolierkörper eine der Anzahl der Phasen entsprechende Anzahl von Durchbrüchen einer ersten lichten Weite aufweisen, und wobei die Stromschienen mit einer ersten Bohrung mit einer der ersten lichten Weite entsprechenden lichten Weite und wenigstens einer zweiten Bohrung mit einer gegenüber der ersten lichten Weite vergrößerten zweiten lichten Weite versehen sind, welche erste und zweite Bohrungen so angeordnet sind, dass bei Übereinanderlegen zweier Stromschienen in der Kontakteinrichtung sich die erste Bohrung der einen Stromschiene im Bereich der zweiten Bohrung der anderen Stromschiene befindet.

Gemäß einer besonders vorteilhaften Ausgestaltung der Erfindung weisen die innen befindlichen Isolierkörper auf einer Seite rillenartige Vertiefungen und auf der anderen Seite rillenartige Erhöhungen in den Bereichen auf, in denen sich die zweiten Bohrungen befinden; dabei greifen die Erhöhungen in dem einen Isolierkörper in die entsprechenden Vertiefungen des anderen Isolierkörpers ein und führen so zur Erhöhung der Kriechstrecken zwischen den Hochstromkontakten und den benachbarten Stromschienen.

Die außen liegenden Isolierkörper sind erfindungsgemäß auf ihrer Außenfläche glatt und eben; dabei kann gemäß Anspruch 4 der außen liegende Isolierkörper auf seiner Innenseite eine Vertiefung sowie weitere Vertiefungen aufweisen, die mit den Bohrungen fluchten, so dass dabei ein Einstecken eines Stiftkontaktes einfach ermöglicht wird.

Weitere vorteilhafte Ausgestaltungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen und weitere Vorteile näher erläutert und beschrieben werden.

Es zeigen:
- Fig. 1: eine Aufsicht auf eine Stromschiene,
- Fig. 2: eine Aufsicht auf einen Isolierkörper und
- Fig. 3: eine Schnittansicht durch eine Übereinanderstapelung von Stromschienen und Isolierkörpern, geschnitten entlang der Längsmittellinie, entsprechend der Schnittlinie III-III der Fig. 2.

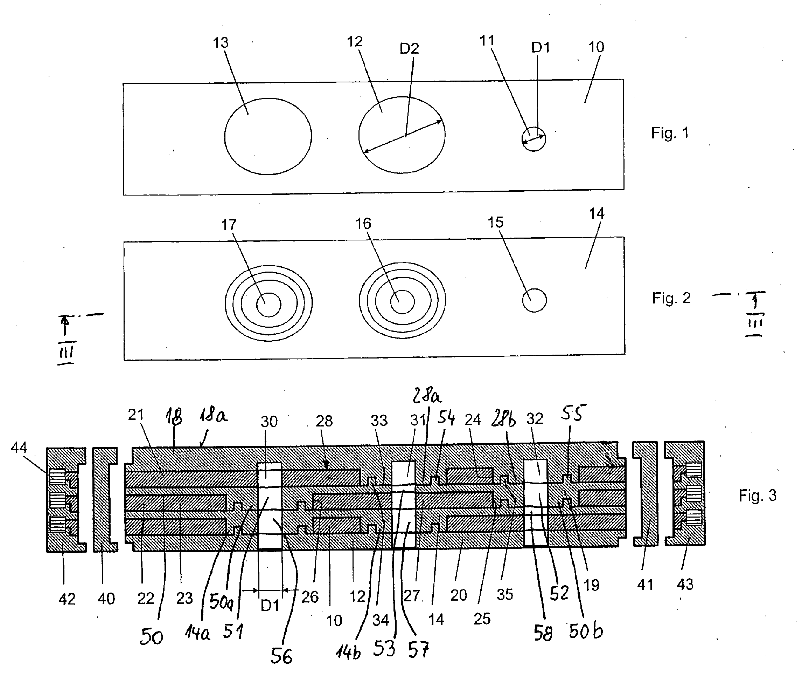

Es sei Bezug genommen auf die Fig. 3.

Dort ist eine Anordnung dargestellt, bei der zwischen Isolierkörpern 18, 19, 20; 14 jeweils eine Stromschiene 21, 22, 10 eingesetzt ist, wobei sich die Stromschiene 21 zwischen den Isolierkörpern 18 und 19, die Stromschiene 22 sich zwischen den Isolierkörpern 19 und 14 und die Stromschiene 10 sich zwischen den Isolierkörpern 14 und 20 befinden. Die Isolierkörper 18 bis 20, 14 besitzen etwa die gleiche Umfangskontur wie die Stromschienen 21, 22, 10 und sind wie diese langgestreckt rechteckig.

Die Fig. 1 zeigt eine Aufsicht auf eine Stromschiene 10 aus Flachbandmaterial, die eine erste Bohrung 11 mit einem ersten Durchmesser D₁ sowie zwei zweite Bohrungen 12 und 13 mit jeweils einem zweiten Durchmesser D₂ aufweist. Der Durchmesser D₁ ist deutlich kleiner als der Durchmesser D₂. Warum dies so ist, wird weiter unten näher erläutert. Die Mittelpunkte der Bohrungen 11, 12, 12 liegen auf der Längsmittellinie der Stromschienen 10 und haben den gleichen Abstand voneinander. Die Bohrungen 12, 13 mit größerem Durchmesser D₂ liegen neben einander, hier links von der Bohrung 11 mit kleinerem Durchmesser D₁.

Die Fig. 2 zeigt eine Aufsicht auf den Isolierkörper 14, der drei gleiche Durchbrechungen 15, 16 und 17 aufweist, deren Durchmesser bzw. deren lichte Weite dem Durchmesser D₁ entspricht bzw. gleicht.

Die Stromschiene 21 entspricht der Stromschiene 10 und ist Einbaulage um 180° bezogen auf eine in der Zeichenebene verlaufende Linie senkrecht zur Längserstreckung gegenüber der Stromschiene 10 gedreht. Eine der Bohrung 11 entsprechende Bohrung 23 befindet sich links und fluchtet mit der Bohrung 13; die Bohrung 12 befindet sich in der Mitte (sie hat deshalb auch die gleiche Bezugsziffer erhalten wie die Bohrung 12 der Stromschiene 10), und eine der Bohrung 13 entsprechende Bohrung 24 befindet sich auf der rechten Seite und fluchtet mit der Mittelachse der Bohrung 11 der Stromschiene 10.

Bei der Stromschiene 22 befinden sich den Bohrungen 12 und 13 entsprechende Bohrungen 25 und 26 jeweils außen und fluchten mit den Bohrungen 13 und 11 der Stromschiene 10; die der Bohrung 10 entsprechende Bohrung 27 befindet sich mittig und fluchtet mit der Bohrung 12.

Der Isolierkörper 18 ist auf einer Breitseite, die im montierten Zustand, wenn also-Stromschienen und Isolierkörper miteinander verbunden sind, außen liegt, glatt und eben und auf der anderen Breitseite ist eine Vertiefung 28 vorgesehen, die an die Abmessung der Stromschiene 21 angepasst ist, so dass die Stromschiene 21 in den Isolierkörper 18 eingelegt werden kann. Die freie Fläche der Stromschiene 21 liegt in der Ebene 33, wobei - ausgehend von der Vertiefung 28 - zwei Vorsprünge 28a, 28b vorgesehen sind, die durch die Bohrungen 12 und 24 bis in die Ebene 33 vorspringen.

Ausgehend von dieser Ebene besitzt der Isolierkörper 18 drei zweite Vertiefungen 30, 31 und 32, deren Grund jeweils in einer Ebene liegt, die parallel zur Breitseitenfläche des Isolierkörpers 18 verläuft; der Abstand von dieser Breitseitenfläche, die hier die Bezugsziffer 18a trägt, ist kleiner als der Abstand der Vertiefung 28 von dieser Breitseitenfläche 18a, damit ein Kontaktstift, der eingesteckt wird, sicher auf seiner Umfangsfläche und der Stromschiene 21 im gesamten Dickenbereich kontaktiert ist.

Von dieser Ebene 33 ausgehend sind die Vertiefungen 31 und 32 von rillenartigen dritten Vertiefungen 34 und 35 umgeben.

Der Isolierkörper 19 besitzt auf der Seite, die im montierten Zustand von der Stromschiene 21 abgelegen ist, eine Vertiefung 50, die so ausgebildet ist, dass die Stromschiene 22 eingelegt werden kann, wobei der Isolierkörper auf dieser Seite, ausgehend von der Vertiefung 50 den Vorsprüngen 28a und 28b entsprechende Vorsprünge 50a und 50b aufweist, welche durch die Bohrungen 26 und 25 der Stromschiene 22 hindurchgreifen können. Im Bereich der Vorsprünge 50a und 50b sind Durchbrüche 51 und 52 vorgesehen, die im montierten Zustand mit den Vertiefungen 30, 32 fluchten. Zwischen den beiden Durchbrüchen 51 und 52 befindet sich ein Durchbruch 53, der mit der Vertiefung 31 fluchtet. Auf der der Stromschiene 21 zugewandten Seite ist der Durchbruch 53 jeweils von einer kreisförmigen Erhöhung 54 und 55 umgeben, die in die Vertiefungen 34 und 35 eingreifen.

Der Isolierkörper 14 ist in ähnlicher Weise ausgebildet, so dass in diesen die Stromschiene 10 eingesetzt werden kann; der Isolierkörper 14 besitzt in ähnlicher Weise Durchbrüche 56 und 57 sowie den Durchbruch 58, die jeweils mit dem Durchbruch 51 in der Vertiefung 30, dem Durchbruch 53 in der Vertiefung 31 und dem Durchbruch 52 und der Vertiefung 32 fluchten.

Den Vorsprüngen 50a und 50b entsprechende Vorsprünge 14a und 14b des Isolierkörpers 14 durchgreifen die entsprechenden Durchbrüche 13 und 12 der Stromschiene 10 und sie besitzen ähnlich wie die Vorsprünge 50a und 50b entsprechende Rillen (ohne Bezugsziffer), in die Erhöhungen (ohne Bezugsziffer) am äußeren Isolierkörper 20 eingreifen.

Im montierten Zustand ist die freie Seite des Isolierkörpers 20 glatt und eben, und dort, wo die einzelnen Durchbrüche 51, 56; 53, 57; 52, 58 vorgesehen sind, besitzt die Isolierplatte 19 ebenfalls entsprechende Durchbrechungen, die hier ebenfalls nicht näher bezeichnet sind. Im Bereich der Bohrungen mit größeren Durchmesser besitzen die Isolierkörper Rillen und Vorsprünge zur Vergrößerung der Erhöhung der Kriechstrecke zwischen in die Durchbrüche 51, 56 ... eingesetzte Kontaktstifte und den benachbarten Stromschienen.

Wie oben schon erwähnt, besitzen alle Isolierkörper 18, 19, 14 und 20 den Durchbrechungen 15, 16 und 17 entsprechende Durchbrechungen, die im montierten Zustand miteinander fluchten, so dass über die entsprechende Durchbrechung 17 aller Isolierkörper die Stromschiene 21, über die Durchbrechung 16 aller Isolierkörper die Stromschiene 22 und über die der Durchbrechung 15 entsprechende Durchbrechung aller Isolierkörper die Stromschiene 10 und dementsprechend die anderen Stromschienen mittels Hochstromkontaktelementen kontaktierbar sind.

Nach Montage können an den entgegengesetzt liegenden Stirnseiten Abdeckkappen 40, 41 oder Abdeckkappen 42 und 43 aufgesetzt sein; die Abdeckkappen 40 und 41 sind vollständig aus Isoliermaterial, wogegen in den Abdeckkappen 42 und 43 Kontaktelemente 44 eingesetzt sind, die mit den Stromschienen 21, 22 und 14 an deren Stirnseiten oder Stirnkanten in Berührung gelangen und an denen weitere Verbindungsleitungen angeschlossen werden können.

## Patentansprüche

1. Kontakteinrichtung für eine zwei- oder mehrphasige Stromschienenanordnung, mit einer Stromschiene (10, 21, 22) pro Phase, die als Flachbandleiter zwischen je zwei Isolierkörpern (18, 19; 19,14; 14, 20) eingelegt sind, wobei die Isolierkörper (18, 19, 14, 20) und die Stromschienen (10, 21, 22) mechanisch miteinander verbindbar sind, wobei die Isolierkörper (18, 19,...) eine der Anzahl der Phasen entsprechende Anzahl von Durchbrüchen (51, 56; 52, 58) mit einer ersten lichten Weite aufweisen, wobei die Stromschienen mit einer ersten Bohrung (11) mit einer der ersten lichten Weite entsprechenden lichten Weite und wenigstens einer zweiten Bohrung (12, 13) mit einer gegenüber der ersten lichten Weite vergrößerten weiteren lichten Weite versehen sind, welche erste und zweite Bohrungen (11, 12, 13) so angeordnet sind, dass bei Übereinanderlegen zweier Stromschienen sich die erste Bohrung der einen Stromschiene im Bereich der zweiten Bohrung der anderen Stromschiene befindet, und wobei jeweils eine Stromschiene mit jeweils einem Hochstromkontakt kontaktierbar ist.

2. Kontakteinrichtung nach Anspruch 1, **dadurch gekennzeichnet, dass** die innen befindlichen Isolierkörper (14, 19) auf einer Seite rillenartige Vertiefungen (34, 35) und auf der anderen Seite rillenartige Erhöhungen (54, 55) in den Bereichen aufweisen, in denen sich die zweiten Bohrungen befinden, dergestalt, dass die Erhöhungen in dem einen Isolierkörper in die entsprechenden Vertiefungen des anderen Isolierkörpers eingreifen und so zur Erhöhung von Kriechstrecken zwischen den Hochstromkontakten und den benachbarten Stromschienen führen.

3. Kontakteinrichtung nach einem der Ansprüche 1 und 2, **dadurch gekennzeichnet, dass** die außenliegenden Isolierkörper (18, 20) auf ihrer Außenfläche glatt und eben sind.

4. Kontakteinrichtung nach Anspruch 3, **dadurch gekennzeichnet, dass** der eine außenliegende Isolierkörper (18) auf seiner Innenseite eine Vertiefung (28) sowie weitere Vertiefungen (30, 31 und 32) aufweist, die mit den Bohrungen (13, 12, 11) fluchten.

5. Kontakteinrichtung nach einem der vorigen Ansprüche, **dadurch gekennzeichnet, dass** der auf der entgegengesetzten Seite liegende Isolierkörper (20) Durchbrüche, die mit den Bohrungen (11, 12, 13) fluchten, sowie kreisförmige Erhöhungen aufweist, die in entsprechende rillenförmige Vertiefungen des benachbarten Isolierkörpers (14) eingreifen.
